(19) Europäisches Patentamt
European Patent Office
Office européen des brevets

(11) Veröffentlichungsnummer: **0 322 837 B1**

(12) **EUROPÄISCHE PATENTSCHRIFT**

(45) Veröffentlichungstag der Patentschrift: **01.06.94**

(51) Int. Cl.[5]: **C08G 69/32**, C08G 69/28, D01F 6/80

(21) Anmeldenummer: **88121676.6**

(22) Anmeldetag: **24.12.88**

(54) **Fäden-, faser- oder filmbildende aromatische Copolyamide, Verfahren zu ihrer Herstellung und Verwendung.**

(30) Priorität: **31.12.87 DE 3744601**

(43) Veröffentlichungstag der Anmeldung:
**05.07.89 Patentblatt 89/27**

(45) Bekanntmachung des Hinweises auf die Patenterteilung:
**01.06.94 Patentblatt 94/22**

(84) Benannte Vertragsstaaten:
**AT BE CH DE FR GB IT LI LU NL SE**

(56) Entgegenhaltungen:
**EP-A- 0 199 090**
**DE-A- 3 007 063**

**PATENT ABSTRACTS OF JAPAN, Band 3, Nr. 43 (C-42), 13. April 1979; & JP-A-5418922**

**PATENT ABSTRACTS OF JAPAN, Band 5, Nr. 180 (C-79)(852), 19, November 1981; & JP-A-56104937**

**PATENT ABSTRACTS OF JAPAN, Band 11, Nr. 167 (C-425)(2614), 28. Mai 1987; & JP-A-62534**

(73) Patentinhaber: **HOECHST AKTIENGESELL-SCHAFT**

**D-65926 Frankfurt(DE)**

(72) Erfinder: **Herold, Friedrich, Dr.**
**Thüringer Weg 57**
**D-6238 Hofheim am Taunus(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Fäden, Fasern und Folien aus aromatischen Copolyamiden (Polyaramide) des Dicarbonsäure-Diamintyps sowie Verfahren zu ihrer Herstellung und mögliche Anwendungen. Im speziellen lassen sich nach dieser Erfindung Fäden, Fasern und Folien mit hoher Reißdehnung und hohem Anfangsmodul erhalten, und zwar unter Verwendung leicht zugänglicher Monomerer und daraus aufgebauten Polyaramiden mit guter Löslichkeit in organischen Lösungsmitteln.

Polyaramide sind bekannt für ausgezeichnete thermische, chemische und mechanische Eigenschaften.

Fäden aus überwiegend p-verknüpften Homopolymeren wie Poly-p-phenylenterephthalamid (PPTA) aus p-Phenylendiamin (PPD) und Terephthalsäuredichlorid (TPC) zeigen zwar sehr hohe mechanische Eigenschaften, werden jedoch wegen der geringen Löslichkeit in organischen Lösungsmitteln aus konzentrierter Schwefelsäure, d.h. in einem zweistufigen Prozeß mit Umlöseschritt verarbeitet (DE-PS 2 219 703). Hierbei ergeben sich aber Probleme hinsichtlich der Korrosion der Apparateteile, nachteilig ist zudem die geringe Reißdehnung bzw. Querfestigkeit, die die textile Verarbeitbarkeit, z.B. zu Geweben für Verstärkungsanwendungen, erschwert bzw. zu Schädigungen an den Fäden führt.

Abhilfe wird z.B. geschaffen durch Copolymere auf Basis von PPTA und 3,4′-Diaminodiphenylether (3,4′-ODA) bzw. 1,4-Bis-(4′-aminophenoxy)benzol (BAPOB), wobei die Verarbeitbarkeit in organischen Lösungmitteln durch den Einbau von flexiblen Gruppen erreicht wird (EP-B 0 045 934 bzw. EP 0 199 090). Fäden aus diesen Copolymeren zeigen wie PPTA zwar sehr hohe mechanische Eigenschaften, besitzen jedoch immer noch nur eine geringe Reißdehnung bzw. Querfestigkeit.

Der Übergang zu Systemen aus m-Phenylendiamin (MPD) und Isophthalsäuredichlorid (IPC) führt zwar zu deutlich höheren Reißdehnungen und ausgezeichneter Löslichkeit in organischen Lösungmitteln, allerdings bei einer deutlichen Verschlechterung der mechanischen Eigenschaften, insbesondere des Anfangsmoduls (US-PS 3 063 966).

DE-PS 3 007 063 beschreibt u.a. Copolyamide auf Basis von TPC, IPC, PPD, MPD und/oder 3,4′-ODA, die zwingend 3,4′-ODA oder eine strukturähnliche Verbindung mit anderen Brückengliedern zwischen den Phenylkernen enthalten, die sich aus organischen Lösungsmitteln zu Fäden verarbeiten lassen und sowohl einen hohen Anfangsmodul als auch hohe Reißdehnungen besitzen. Nachteilig ist, daß die zur Herstellung benötigten 3,4′-substituierten Diamine wie 3,4′-ODA nur in sehr aufwendigen Verfahren hergestellt und gereinigt werden können.

Der Erfindung liegt daher die Aufgabe zugrunde, aromatische Copolyamide bereitzustellen, die aus leicht zugänglichen Monomeren mit guter Löslichkeit in organischen Lösungsmitteln hergestellt werden können und die Herstellung von Fäden, Fasern und Folien mit hohem Anfangsmodul und einer für die Verarbeitung günstigen Reißdehnung (bei verstreckten Fäden größer gleich 5 %) erlauben sowie deren Anwendung.

Die Aufgabe wurde mit aromatischen Copolyamiden gelöst, wie sie in den Patentansprüchen gekennzeichnet sind. Die formgebende Struktur dieser Copolyamide besteht mindestens aus den folgenden wiederkehrenden Struktureinheiten:

A: -CO-Ar-CO- sowie
B: $-NH-Ar^1-NH-$
C: $-NH-Ar^2-NH-$
D: $-NH-Ar^3-Z-Ar^3-NH-$ wobei

- Ar-, $-Ar^1-$ und $-Ar^3-$ jeweils ein zweiwertiger aromatischer Rest mit 6 bis 12 C-Atomen, bei dem die Bindungen in p- oder vergleichbarer koaxialer oder paralleler Stellung stehen und der mit einem oder zwei Alkyl- oder Alkoxylresten bis zu vier C-Atomen, auch verzweigt, oder Halogenresten substituiert sein kann,
- $Ar^2$- ein zweiwertiger aromatischer Rest, bei dem die Bindungen in m- oder vergleichbar gewinkelter Stellung stehen und der mit einem oder zwei Alkyl- oder Alkoxylresten bis zu vier C-Atomen, auch verzweigt, oder Halogenresten substituiert sein kann,
- -Z- eine Gruppierung -O-Ar-O-, wobei -Ar- wie vorstehend angegeben definiert ist,

bedeuten.

Die Mengen der eingesetzten Diamine sind nicht beliebig wählbar, sondern nur innerhalb bestimmter Molprozentbereiche, bezogen auf die gesamte Molmenge der Diaminkomponenten B bis D. Dieser Bereich wird definiert durch die Eckpunkte Q, R, S und T, besonders bevorzugt ist der Bereich mit den Eckpunkten Q′, R′, S′, T′ und U′, vgl. Figur.

Bei der Herstellung der erfindungsgemäßen aromatischen Copolyamide können kleinere Mengen einer fünften Komponente E zugesetzt werden, wodurch die Struktur der erhaltenen Copolymere sowohl steifer als auch flexibler ausfallen kann gegenüber den Copolymeren aus den Strukturen A bis D und sich die

mechanischen Eigenschaften entsprechend noch geringfügig modellieren lassen.

Der Staudingerindex [$\eta$] der formbildenden Copolyamide liegt im Bereich von 50 bis 1000 $cm^3$/g, bevorzugt 200 bis 600 $cm^3$/g, gemessen in 96 %iger $H_2SO_4$ bei 25 °C.

Die Herstellung von Fäden, Fasern und Folien erfolgt nach bekannten Verfahren mit Lösungen dieser Copolymeren in organischen Lösungsmitteln, gegebenenfalls unter Zusatz von Lösevermittlern.

Erfindungsgemäß besitzen Fäden, Fasern und Folien aus diesen Copolymeren sowohl die gewünschte Reißdehnung, bei verstreckten Fäden größer oder gleich 5 %, als auch hohe Anfangmoduli.

Zur Herstellung für die erfindungsgemäßen Copolyamide eignen sich die nachfolgend angeführten Verbindungen.

Als Dicarbonsäurederivate der Formel Cl-CO-Ar-CO-Cl (A′) sind beispielsweise 4,4′-Diphenylsulfondicarbonsäuredichlorid, 4,4′-Diphenyletherdicarbonsäuredichlorid, 4,4′-Diphenyldicarbonsäuredichlorid, 2,6-Naphthalindicarbonsäuredichlorid und substituierte Terephthalsäuredichloride wie 2-Chlorterephthalsäuredichlorid geeignet.

Als aromatische Diamine der Struktur $H_2N$-$Ar^1$-$NH_2$ (B′) eignen sich p-Phenylendiamin bzw. substituierte p-Phenylendiamine wie z.B. 2-Chlor-, 2,5-Dichlor- oder 2-Methoxy-p-phenylendiamin.

Als aromatische Diamine der Struktur $H_2N$-$Ar^2$-$NH_2$ (C′) eignen sich m-Phenylendiamin bzw. substituierte m-Phenylendiamine wie z.B. 5-Methoxy-m-phenylendiamin.

Als Diaminkomponente der Struktur $H_2N$-$Ar^3$-Z-$Ar^3$-$NH_2$ (D′) sind 1,4-Bis-(4′-aminophenoxy)benzol und substituierte Derivate, in denen -$Ar^3$- wie oben definiert ist, geeignet.

Erfindungsgemäß sind neben der Dicarbonsäurekomponente drei Diaminkomponenten zur Bildung des Copolyamids notwendig, wobei die Mengen der eingesetzten Diamine nicht beliebig wählbar sind, sondern nur innerhalb bestimmter Molprozentbereiche, bezogen auf die gesamte Molmenge an Diaminkomponenten.

Der erfindungsgemäß erforderliche Zusammensetzungsbereich der Copolymeren ist durch die folgenden Eckpunkte definiert; die Abgrenzung des Bereiches ist auch grafisch in der Figur im Dreieckskoordinatensystem dargestellt. Die Eckpunkte des beanspruchten Bereiches weisen die in der Figur gezeigten Zuordnungen auf.

Tab.1

| Punkt | mol-% an | | | Punkt | mol-% an | | |
|---|---|---|---|---|---|---|---|
| | B | C | D | | B | C | D |
| Q | 15 | 80 | 5 | Q′ | 20 | 70 | 10 |
| R | 60 | 35 | 5 | R′ | 55 | 35 | 10 |
| S | 60 | 10 | 30 | S′ | 55 | 30 | 15 |
| T | 15 | 32,5 | 52,5 | T′ | 40 | 30 | 30 |
| | | | | U′ | 20 | 50 | 30 |
| Definition der Eckpunkte der beanspruchten Bereiche, vgl. Figur | | | | | | | |

Beansprucht wird der durch die Eckpunkte Q, R, S und T definierte Bereich, bevorzugt gilt der Bereich mit den Eckpunkten Q′, R′, S′, T′ und U′. Die erfindungsgemäßen Eigenschaften beruhen auf dem Einbau der Aminbausteine B′, C′ und D′ in den angegebenen Grenzen.

Beim Aufbau der so definierten aromatischen Copolyamide können erfindungsgemäß kleinere Mengen, d.h. bis zu 25 mol-%, einer fünften Struktureinheit E zugegen sein. Diese Komponente entspricht der Formel (D′), in der Z jedoch eine kovalente Bindung ist und die Aminogruppe auch eine Säuregruppe darstellen kann. Je nach Struktur lassen sich z.B. die mechanischen Eingeschaften der erhaltenen Copolymere nochmals leicht modellieren. Als fünfte Komponente eignen sich zahlreiche Verbindungen, allgemein überwiegend sowohl aromatische Säure- als auch Diaminderivate. Gut geeignet sind beispielsweise 3,3′-Dimethoxy-, 3,3′-Dibutoxy-, 3,3′-Dichlor-, 2,2′-Dimethylbenzidin, vorzugsweise jedoch 3,3′-Dimethylbenzidin.

Die Herstellung der Copolyamide gemäß der Erfindung erfolgt durch Copolymerisation. Außer der Lösungskondensation, die als günstigstes Verfahren gilt, können auch andere übliche Verfahren zur Herstellung von Polyamiden, wie beispielsweise Schmelze-, Feststoff- oder Grenzflächenkondensation, angewendet werden.

Die Lösungskondensation der aromatischen Dicarbonsäuredichloride mit den Mischungen aus aromatischen Diaminen erfolgt in aprotischen, polaren Lösungsmitteln vom Amidtyp, z. B. in N,N-Dimethylacetamid oder insbesondere in N-Methyl-2-pyrrolidon. Gegebenenfalls können diesen Lösungsmitteln in bekannter Weise

zur Erhöhung der Lösefähigkeit bzw. zur Stabilisierung der Polyamidlösungen Halogenidsalze der ersten und/oder zweiten Gruppe des periodischen Systems zugegeben werden. Bevorzugte Zusätze sind Calciumchlorid und/oder Lithiumchlorid. Üblicherweise wird die Menge an Dicarbonsäuredichlorid so gewählt, daß die Lösungviskosität maximal wird, d.h. je nach Reinheit der Monomere werden geringfügig mehr oder weniger als 100 mol-% zugesetzt.

Die Polykondensationstemperaturen liegen üblicherweise zwischen -20 und +120 °C, bevorzugt zwischen +10 und +100 °C. Besonders gute Ergebnisse werden bei Reaktionstemperaturen zwischen +10 und +80 °C erzielt. Die Polykondensationsreaktionen werden vorzugsweise so ausgeführt, daß nach Abschluß der Reaktion 2 bis 30, vorzugsweise 3 bis 20 Gew.-% an Polykondensat in der Lösung vorliegen. Für spezielle Anwendungen kann die Lösung bei Bedarf mit N-Methyl-2-pyrrolidon oder anderen Amidlösungsmitteln verdünnt werden.

Die Polykondensation kann in üblicher Weise, z. B. durch Zugabe von monofunktionellen Verbindungen wie Benzoylchlorid gestoppt werden, ebensogut ist die Verwendung monofunktioneller Amine zur Begrenzung der Molmasse geeignet.

Nach Beendigung der Polykondensation, d.h. wenn die Polymerlösung die zur Weiterverarbeitung erforderliche Viskosität erreicht hat, wird der entstandene und locker an das Amidlösungsmittel gebundene Chlorwasserstoff durch Zugabe basischer Substanzen neutralisiert. Geeignet sind dafür beispielsweise Lithiumhydroxyd, Calciumhydroxyd, insbesondere aber Calciumoxid. Zur Herstellung von geformten Gebilden gemäß der vorliegenden Erfindung werden die oben beschriebenen erfindungsgemäßen Polyamidlösungen filtriert, entgast und in bekannter und im folgenden geschilderter Weise weiterverarbeitet.

Den Lösungen können auch geeignete Mengen an Additiven zugesetzt werden. Beispiele sind Lichtstabilisatoren, Antioxidationsmittel, Antistatika, Farbstoffe, Farbpigmente oder Füllstoffe.

Die Copolyamide können durch geeignete Verfahren, wie beispielsweise Destillation, Ausfällen oder Extraktion, isoliert und dann erneut mit Lösungsmitteln des Amidtypes, eventuell unter Verwendung der beschriebenen Zusätze zur Erhöhung der Lösefähigkeit, versetzt werden. Es liegt dann eine sogenannte Ausformlösung vor, die weiterverarbeitet werden kann. Bevorzugt wird aber die direkte Verarbeitung der Kondensationslösung.

Die Herstellung der geformten Artikel aus der Ausformlösung kann durch Trocken-, Naß- oder Trockennaßverfahren sowie durch Versprühen erfolgen.

Beispielsweise wird die Spinnlösung bei Naßverfahren durch einen Spinnkopf mit mehreren Spinnöffnungen in ein Koagulationsbad gefördert, wobei sich die Lösung zu Fäden verfestigt. Bei einer Variante dieses Verfahrens, dem sogenannten Trockennaßverfahren, durchlaufen die Fäden zunächst ein inertes Medium, vorzugsweise Luft oder Stickstoff, und treten erst dann in das Koagulationsbad ein.

Pulp entsteht beispielsweise durch Versprühen der Lösungen in ein geeignetes Koagulationsbad.

Zur Formung von Folien dienen bekannte Verfahren wie Gieß- oder Extrudierverfahren. Beim Gießverfahren wird die filtrierte und entgaste Lösung in dünnen Schichten auf Trägermaterialien aufgebracht. Geeignete Trägermaterialien sind inerte Polymerfolien, z.B. aus Polyester oder Metallbänder, im Labormaßstab auch Glasplatten. Bevorzugt ist eine Verarbeitung der Lösungen bei Temperaturen von mindestens ca. 10 °C unterhalb des Siedepunktes des verwendeten Lösungsmittels, besonders bevorzugt bei mindestens ca. 30 °C unterhalb des Siedepunktes. Bei zu hohen Temperaturen besteht die Gefahr, daß eine Schädigung der Polymeren eintritt, während bei zu niedrigen Temperaturen die Verarbeitung wegen der hohen Viskositäten erschwert wird. Günstig, aber nicht notwendig ist eine Vortrocknung der gegossenen Folien, bevorzugt bis zu einem Lösungsmittelgehalt der Folie zwischen 5 und 90 %. Geeignete Bedingungen sind Temperaturen zwischen Raumtemperatur und ca. 10 °C unterhalb des Siedepunktes des verwendeten Lösungsmittels, auch verbunden mit starker Konvektion wie sie beispielsweise in Umluftschränken herrscht. Je nach Temperatur und Konvektion genügen Zeiten zwischen einigen Minuten bis zu Tagen, bevorzugt 2 bis 30 Minuten. Die Folien lassen sich vom Trägermaterial sofort, bei oder direkt nach der Koagulation ablösen. Alternativ zum Gießverfahren können die filtrierten und entgasten Lösungen auch direkt durch geeignete Düsen koaguliert werden. Dabei sind Naß- oder Trockennaßverfahren anwendbar, bei ersterem wird direkt koaguliert, bei letzterem durchläuft die vorgeformte Folie zunächst eine Zone mit einem nichtkoagulierenden Medium, z.B. Luft. Diese Zone kann zwischen 5 und 400 mm, bevorzugt zwischen 10 und 100 mm betragen.

Als Koagulationsbad können Wasser, organische Lösungsmittel oder Mischungen daraus verwendet werden, jeweils bei Bedarf auch mit Salzzusätzen. Als Salzzusatz eignen sich z.B. die vorstehend aufgeführten Halogenidsalze der ersten und zweiten Gruppe des periodischen Systems. Bevorzugt gilt das Salz, welches auch als Lösungsvermittler zur Herstellung der Kondensationslösung benutzt wird, besonders bevorzugt ist $CaCl_2$, wobei die Konzentration in weiten Bereichen variiert werden kann. Die Temperatur sollte ca. 10 °C kleiner als der Siedepunkt des Koagulationsbades sein, bevorzugt zwischen Raumtemperatur und 90 °C.

Die koagulierten Fäden bzw. Folien werden anschließend gewässert, z.B. können sie über Rollen durch mehrere aufeinander folgende Waschbäder geführt werden. Möglichst vollständiges Auswaschen des Salzes ist die Voraussetzung zum Erreichen der erfindungsgemäßen Eigenschaften. Bevorzugt sind hierfür wäßrige Bäder, deren Temperaturen im allgemeinen zwischen Raumtemperatur und 90 °C, bevorzugt bis 70 °C liegen sollen. Üblicherweise gelten mehrere Bäder in Reihe und eine Umwälzung des Mediums (Gegenströmung) als günstig.

Die Trocknung erfolgt bevorzugt über Rollen oder durch IR-Strahler bei Temperaturen zwischen 100 und 500 °C. Günstig aber nicht notwendig ist hierbei das Arbeiten mit Temperaturgradienten und/oder unter Stickstoff. Besonders günstig zur Verarbeitung sind Endtemperaturen von 200 bis 400 °C, die kurze Trocknungszeiten erlauben.

Bei Folien kann man zum Erreichen einer ausgezeichneten Dimensionierungsstabilität bis zu 400 °C ein Temperschritt bei Temperaturen zwischen 200 und 500 °C, bevorzugt 300 bis 400 °C durchführen. Günstig ist es dabei, die Folien unter Belastung zu tempern, ebenfalls kann unter einer Stickstoff-Atmosphäre gearbeitet werden. Die Belastungskraft darf dabei maximal die Reißfestigkeit der Folien bei der jeweiligen Temperatur erreichen, bevorzugt sollte die Folie mit nicht mehr als 10 % dieses Grenzwertes belastet werden. Bei der Herstellung verstreckter Folien erübrigt sich ein gesonderter Temperschritt.

Zum uniaxialen oder biaxialen Verstrecken, wobei letzteres nacheinander oder simultan erfolgt, können bekannte Methoden angewandt werden. Neben Verstreckung trockener Formkörper über heiße Flächen, unter IR-Strahlern oder sonstigen Wärmequellen besteht auch die Möglichkeit, Formkörper mit einem Restgehalt in Lösungsmittel und/oder Salz, auch in Lösungsmittelbädern, naß zu verstrecken. bei der Verstreckung trockener Formkörper liegt ein Vorteil darin, da schon bei relativ niedrigen, minimal notwendigen Temperaturen von 200, vorzugsweise 250 °C, hohe spezifische Werte bezüglich der Eigenschaften erhalten werden. Auch hier kann unter Stickstoff-Atmosphäre verstreckt werden. Auch Kombinationen aus Naß- und Trockenverstreckung sind möglich. Die Verstreckverhältnisse liegen im Bereich 1,5- bis 20-fach, bevorzugt bei 2- bis 10-fach (uniaxial). Erfindungsgemäß genügen schon relativ niedrige Verstreckverhältnisse zum Erreichen außergewöhnlich hoher mechanischer Eigenschaften.

Die erfindungsgemäßen Copolyamide besitzen eine sehr gute Löslichkeit in den vorstehend beschriebenen Lösungsmitteln vom Amidtyp. Die Polymeren zeichnen sich weiter durch ausgezeichnete thermische, chemische, elektrische und mechanische Eigenschaften aus. Als besonders vorteilhaft beim geformten Produkt gilt die Kombination von hohem Aufgangsmodul und relativ hohen Reißdehnungen. Dabei läßt sich die Reißdehnung nahezu linear mit dem Anteil der Komponente C erhöhen. Durch diese Eigenschaftskombination eignen sich die Lösungen der Copolyamide beispielsweise zur Herstellung von Fäden, Fasern, Pulp, Folien, Papier und anderen geformten Artikeln (Formkörper).

Fäden, Fasern oder Pulp aus dem erfindungsgemäßen Copolyamid können beispielsweise als Verstärkungsmaterialien für Gummi, thermoplastische Kunststoffe oder wärmehärtende Harze dienen oder zur Herstellung von Filtergeweben oder als leichter Dämmstoff verwendet werden. Folien und Papier eignen sich als hitzebeständiges Isolationsmaterial, Folien insbesondere als Substrat für flexible Leiterplatten und für den Einsatz im Bereich der Datenverarbeitung.

Die angegebenen Eigenschaftswerte wurden nach folgenden Test-Methoden ermittelt:

**Staudingerindex [$\eta$]:** Der Staudingerindex [$\eta$] ist nach Gleichung (1) definiert:

$$[\eta] = \lim_{c_2 \to 0} \frac{(\eta_L/\eta_1) - 1}{c_2} \qquad (1)$$

wobei $\eta_L$ und $\eta_1$ die Viskositäten der Lösung bzw. des Lösungsmittels und $c_2$ die Konzentration des Polymers bedeuten.

**Viskosität $\eta$:** die Viskosität $\eta$ wurde mit einem Rotationsviskosimeter (Typ RV 100, Fa. Haake, Karlsruhe), bestimmt, angegeben ist der auf Schergefälle Null extrapolierte Wert der Kondensationslösung bei 90 °C.

**Mechanische Eigenschaften:** Für die Messungen diente ein Zug-Dehnungs-Gerät der Fa. Instron, mit dem Reißfestigkeit, Reißdehnung, Anfangsmodul (bis 0,5 % Dehnung), Knoten- und Schlingenfestigkeit bei 23 °C und 50 % relativer Luftfeuchte bestimmt wurden, jeweils als Mittelwerte von mehreren Messungen. Folien wurden in Anlehnung an DIN 53 455, Probekörper 5, geprüft (Streifenbreite 15 mm, Einspannlänge

50 mm und Messgeschwindigkeit 20 mm/min), Fäden in Anlehnung an DIN 53 834, Teil 1.

**Thermische Messungen:** Die thermischen Daten wie Schmelz- und Zersetzungspunkt werden, wenn nicht anders angeführt, nach den Methoden der Thermogravimetrie (TGA: $N_2$, 3 K/min) und der Differentialthermoanalyse (DSC: $N_2$, 10 K/min) ermittelt.

**Beispiele:**

Die Anteil an Dicarbonsäurekomponenten und Diaminkomponenten wurden jeweils zu 100 mol-% berechnet. Es gelten folgende Abkürzungen:

| | |
|---|---|
| BAPOB | 1,4-Bis-(4'-aminophenoxy)benzol |
| DMB | 3,3'-Dimethylbenzidin |
| MPD | m-Phenylendiamin |
| NMP | N-Methyl-2-pyrrolidon |
| PPD | p-Phenylendiamin |
| TPC | Terephthalsäuredichlorid |

1) Aromatisches Copolyamid bestehend aus 100 mol-% TPC, 50 mol-% PPD, 37,5 mol % MPD und 12,5 mol-% BAPOB.

21,63 g PPD, 16,22 g MPD und 14,62 g BAPOB wurden unter Stickstoff ($N_2$) in 1584 g NMP gelöst und dann zwischen 15 und 70 °C innerhalb von ca. 60 Minuten 81,21 g TPC zugegeben. Die viskose und klare Lösung wurde noch ca. 40 Minuten lang bei 70 °C nachgerührt und dann mit 24,54 g CaO (96 %ig, d.h. in 5 %igen Überschuß) neutralisiert und weitere 30 Minuten bei 70 °C nachgerührt.

Die Lösung enthielt 6,0 % Copolyamid und 2,7 % $CaCl_2$; das gelöste Copolyamid zeigt einen Staudingerindex [$\eta$] von 310 $cm^3/g$ und eine Viskosität $\eta$ von 55 Pa•s bei 90 °C. Die Lösung wurde filtriert, entgast und naß versponnen. Dazu wurde sie aus einer Düse mit 50 Öffnungen von jeweils 100 µm Durchmesser in ein Koagulationsbad, bestehend aus einer 60 °C warmen Lösung von 35 % NMP in Wasser, mit einer Geschwindigkeit von 16 m/min ausgesponnen. Die erhaltenen Fäden wurden durch mehrere Waschbäder, eine Waschmaschine (ca. 20 Umschlingungen), über eine Trockengalette und schließlich über eine heiße Fläche bei 380 °C gezogen. Dabei betrug die Verstreckung 1 : 3,5. Die mechanischen Eigenschaften der Fäden ergeben 56 cN/tex Reißfestigkeit, 7 % Reißdehnung, 20 N/tex Anfangsmodul.

Die ausgezeichnete Löslichkeit des Copolyamids zeigt sich bei der Bestimmung von [$\eta$] in der sehr kleinen Huggins-Konstanten $K_H$. Für das System NMP mit LiCl-Zusatz (1 %) findet man für $K_H$ den Wert 0,29 ± 0,01, entsprechend einem thermodynamisch sehr guten Lösungsmittel.

Bei der Untersuchung der thermischen Stabilität des Copolyamids zeigt sich in der Thermogravimetrie (5 K/min, $N_2$) erst ab 460 °C ein Gewichtsverlust. Unterhalb dieser Zersetzungstemperatur erfolgt gemäß der "Differential-Scanning-Calorimetry" (DSC) (20 K/min, $N_2$, vorher bei 250 °C getempert) kein Schmelzen.

2) Eine Lösung entsprechend der Zusammensetzung von Beispiel 1 wurde filtriert, entgast und zu Folien gegossen.

Dazu wurde sie mit einer Rakel bei 90 °C auf Glasplatten ausgezogen. Die gegossenen Folien wurden anschließend 48 Stunden bei 90 °C vorgetrocknet, dann in Wasser bei 25 °C koaguliert, anschließend für 20 Minuten in fließendem Trinkwasser und für 24 Stunden in entsalztem $H_2O$ gewässert und danach bei 110 °C und 50 mbar unter leichter $N_2$-Überleitung für 48 Stunden getrocknet.

Die Dicke der Folien konnte, je nach der aufgerakelten Schichtdicke der Lösung, zwischen 2 und 100 µm eingestellt werden.

Die mechanischen Eigenschaften einer unverstreckten 25 µm starken Folie betragen 169 MPa Reißfestigkeit, 124 % Reißdehnung und 3,1 GPa Anfangsmodul.

3) Aus 32,44 g PPD, 24,33 g MPD, 21,93 g BAPOB, 1722 g NMP, 121,82 g TPC und 36,80 g CaO wurde eine Lösung wie in Beispiel 1 hergestellt. Die Lösung erhielt 8,0 % Copolyamid und 3,6 % $CaCl_2$, das gelöste Copolyamid zeigt einen Staudingerindex [$\eta$] von 345 $cm^3/g$ und eine Viskosität $\eta$ von 460 Pa•s bei 90 °C.

Diese Lösung wurde mit einer Düse mit 100 Öffnungen von jeweils 100 µm Durchmesser analog zu Beispiel 1 zu Fäden verarbeitet. Die Prüfung der mechanischen Eigenschaften ergab Werte für Reißfestigkeit (66 cN/tex), Reißdehnung (8 %) und den Anfangsmodul (23 N/tex). Die Knoten- und Schlingenfestigkeit beträgt 49 bzw. 52 % der Reißfestigkeit.

4 bis 15 und Vergleichsbeispiele V1 bis V5)

Die Beispiele 4 bis 10 zeigen die Möglichkeit, durch Variation der Zusammensetzung des Copolyamids innerhalb der beanspruchten Bereiche die mechanischen Eigenschaften sowie die Löslichkeit weitgehend zu variieren und den Anforderungen einer jeweiligen Anwendung anzupassen.

Vergleichsbeispiele V1 bis V5, durch den Präfix V gekennzeichnet, sind Versuche außerhalb des beanspruchten Bereiches.

Die Beispiele 11 bis 15 verdeutlichen die Möglichkeit, kleinere Mengen einer fünften Diaminkomponente E zuzusetzen.

Die Herstellung der Fäden erfolgte in allen Fällen entsprechend Beispiel 1, die erhaltenen Daten faßt Tabelle 2 zusammen. Im einzelnen gibt Tabelle 2 die Zusammensetzung der Copolymeren, die Konzentration an Polymer und $CaCl_2$, den Staudingerindex $[\eta]$ und die Viskosität $\eta$ bei 90 °C sowie die Fädeneigenschaften an.

Bei Beispiel 4 betragen die Werte für die Knoten- bzw. Schlingenfestigkeit 58 bzw. 66 % der Reißfestigkeit.

Den Vergleichsbeispielen V2 und V3 mußten jeweils 30 g LiCl zugesetzt werden, um eine klare und homogene Lösung zu erhalten. Diese Ansätze konnten nicht oder nur schlecht zu Fäden versponnen werden.

Bei allen Ansätzen wurden stets 81,21 g TPC (Komponente A) und 24,54 g CaO (96 %ig, d.h. im 5 %igen Überschuß) eingesetzt.

Tabelle 2: 1. Teil

| Beispiel | B | | | C | | | D | | | E | | |
|---|---|---|---|---|---|---|---|---|---|---|---|---|
| Nr. | Bez. | mol-% | g | Bez. | mol-% | g | Bez. | mol-% | g | Bez. | mol-% | g |
| V1 | PPD | 62,5 | 27,04 | MPD | 25 | 10,81 | BAPOB | 12,5 | 14,62 | - | - | - |
| 4 | PPD | 37,5 | 16,22 | MPD | 50 | 21,63 | BAPOB | 12,5 | 14,62 | - | - | - |
| 5 | PPD | 25 | 10,81 | MPD | 62,5 | 27,04 | BAPOB | 12,5 | 14,62 | - | - | - |
| V2* | PPD | 75 | 32,44 | MPD | 12,5 | 5,04 | BAPOB | 12,5 | 14,62 | - | - | - |
| 6 | PPD | 37,5 | 16,22 | MPD | 37,5 | 16,22 | BAPOB | 25 | 29,23 | - | - | - |
| 7 | PPD | 25 | 10,81 | MPD | 50 | 21,63 | BAPOB | 25 | 29,23 | - | - | - |
| 8 | PPD | 50 | 21,63 | MPD | 25 | 10,81 | BAPOB | 25 | 29,23 | - | - | - |
| V3* | PPD | 62,5 | 27,04 | MPD | 12,5 | 5,41 | BAPOB | 25 | 29,23 | - | - | - |
| V4 | PPD | 50 | 21,63 | MPD | 12,5 | 5,41 | BAPOB | 37,5 | 43,85 | - | - | - |
| 9 | PPD | 37,5 | 16,22 | MPD | 25 | 10,81 | BAPOB | 37,5 | 43,85 | - | - | - |
| 10 | PPD | 25 | 10,81 | MPD | 37,5 | 16,22 | BAPOB | 37,5 | 43,85 | - | - | - |
| V5 | PPD | 25 | 10,81 | MPD | 25 | 10,81 | BAPOB | 50 | 58,47 | - | - | - |
| 11 | PPD | 45 | 19,47 | MPD | 33,75 | 14,60 | BAPOB | 11,25 | 13,16 | DMB | 10 | 8,49 |
| 12 | PPD | 40 | 17,30 | MPD | 30 | 12,98 | BAPOB | 10 | 11,69 | DMB | 20 | 16,98 |
| 13 | PPD | 33,75 | 14,60 | MPD | 45 | 19,47 | BAPOB | 11,25 | 13,16 | DMB | 10 | 8,49 |
| 14 | PPD | 30 | 12,98 | MPD | 40 | 17,30 | BAPOB | 10 | 11,69 | DMB | 20 | 16,98 |
| 15 | PPD | 20 | 8,65 | MPD | 50 | 21,63 | BAPOB | 10 | 11,69 | DMB | 20 | 16,98 |

* Zusatz von 30 g LiCl

**Tabelle 2: 2. Teil**

| Beispiel Nr. | NMP g | Konzentration % Polymer | Konzentration % $CaCl_2$ | Charakterisierung $[\eta]/(cm^3/g)$ | Charakterisierung $\eta/Pa \cdot s$ | Fädeneigenschaften Reißfestigkeit (cN/tex) | Fädeneigenschaften Reißdehnung (%) | Fädeneigenschaften Anfangsmodul (N/tex) |
|---|---|---|---|---|---|---|---|---|
| V1 | 1583,7 | 6,0 | 2,7 | 300 | 45 | 40 | 4 | - |
| 4 | 1583,7 | 6,0 | 2,7 | 260 | 17 | 50 | 9 | - |
| 5 | 1583,7 | 6,0 | 2,7 | 250 | 10 | 40 | 12 | - |
| V2* | 1583,7 | 5,2 | 2,2 | 205 | - | - | - | - |
| 6 | 1728,0 | 6,0 | 2,5 | 360 | 94 | - | - | - |
| 7 | 1728,0 | 6,0 | 2,5 | 235 | 11 | 25 | 11 | 7 |
| 8 | 1728,0 | 6,0 | 2,5 | 405 | 360 | 45 | 5 | 19 |
| V3* | 1728,0 | 4,8 | 1,9 | 445 | 160 | - | - | - |
| V4 | 1872,3 | 6,0 | 2,3 | 500 | 240 | 100 | 3 | - |
| 9 | 1872,3 | 6,0 | 2,3 | 490 | 285 | 35 | 5 | - |
| 10 | 1872,3 | 6,0 | 2,3 | 350 | 100 | - | - | - |
| V5 | 2016,6 | 6,0 | 2,1 | 490 | 165 | 30 | 4 | - |
| 11 | 1634,5 | 6,0 | 2,6 | 382 | 66 | 49 | 5 | 22 |
| 12 | 1685,4 | 6,0 | 2,5 | 416 | 55 | 50 | 5 | 22 |
| 13 | 1634,5 | 6,0 | 2,6 | 369 | 43 | 28 | 6 | - |
| 14 | 1685,4 | 6,0 | 2,5 | 346 | 20 | 44 | 6 | 18 |
| 15 | 1685,4 | 6,0 | 2,5 | 277 | 5,9 | 30 | 7 | 13 |

* Zusatz von 30 g LiCl

## Patentansprüche

1. Fäden, faser- und filmbildendes aromatisches Copolyamid des Dicarbonsäure-Diamintyps, dadurch gekennzeichnet, daß es mindestens aus den vier wiederkehrenden Struktureinheiten der Formeln

A: -CO-Ar-CO-
B: $-NH-Ar^1-NH-$
C: $-NH-Ar^2-NH-$
D: $-NH-Ar^3-Z-Ar^3-NH-$

besteht, wobei

- Ar-, $-Ar^1$ und $-Ar^3-$ jeweils ein zweiwertiger aromatischer Rest mit 6 bis 12 C-Atomen, bei dem die Bindungen in p- oder vergleichbarer koaxialer oder paralleler Stellung stehen, und der gegebenenfalls mit einem oder zwei Alkyl- oder Alkoxyresten mit bis zu vier C-Atomen, auch verzweigt, oder Halogenresten substituiert ist,
- $Ar^2-$ ein zweiwertiger aromatischer Rest, bei dem die Bindungen in m- oder vergleichbarer gewinkelter Stellung stehen, und der gegebenenfalls mit einem oder zwei Alkyl- oder Alkoxyresten mit bis zu vier C-Atomen, auch verzweigt, oder Halogenresten substituiert ist,
- -Z- eine Gruppierung -O-Ar-O-, wobei -Ar- wie vorstehend angegeben definiert ist,

bedeuten und die Zusammensetzung der Diamine B, C und D innerhalb des Molprozentbereiches, bezogen auf die gesamte Molmenge der Diaminkomponenten B bis D, liegt, der durch die Eckpunkte Q, R, S und T gebildet wird, wobei:

| | | | |
|---|---|---|---|
| Punkt Q: | 15 mol-% B, | 80 mol-% C, | 5 mol-% D |
| Punkt R: | 60 mol-% B, | 35 mol-% C, | 5 mol-% D |
| Punkt S: | 60 mol-% B, | 10 mol-% C, | 30 mol-% D |
| Punkt T: | 15 mol-% B, | 32,5 mol-% C, | 52,5 mol-% D |

bedeutet, und deren Staudingerindex [$\eta$] im Bereich 50 bis 1000 $cm^3/g$ liegt, gemessen in 96 %iger $H_2SO_4$ bei 25 °C.

**2.** Copolyamid nach Anspruch 1, dadurch gekennzeichnet, daß der Staudingerindex im Bereich 200 bis 600 $cm^3/g$ liegt, gemessen in 96 %iger $H_2SO_4$ bei 25 °C.

**3.** Verfahren zur Herstellung eines aromatischen Copolyamids gemäß Anspruch 1 und 2, bei dem eine Copolykondensation von mindestens vier aromatischen monomeren Verbindungen, A', B', C' und D', die jeweils eine Gruppe der folgenden Formeln

A: -CO-Ar-CO-
B: $-NH-Ar^1-NH-$
C: $-NH-Ar^2-NH-$
D: $-NH-Ar^3-Z-Ar^3-NH-$ enthalten,

durchgeführt wird, wobei

- Ar-, $-Ar^1$ -, $-Ar^2-$ und $-Ar^3-$ sowie -Z- die im Anspruch 1 angegebene Bedeutung haben,

dadurch gekennzeichnet, daß die molaren Anteile der monomeren Diaminoverbindungen B' bis D' in solchen Mengen eingesetzt werden, daß das daraus erhaltene Copolyamid innerhalb eines dreieckigen Diagrams für die Zusammensetzung in einen vierseitigen Bereich fällt, der durch die Eckpunkte Q, R, S und T gebildet wird, wobei:

| | | | |
|---|---|---|---|
| Punkt Q: | 15 mol-% B, | 80 mol-% C, | 5 mol-% D |
| Punkt R: | 60 mol-% B, | 35 mol-% C, | 5 mol-% D |
| Punkt S: | 60 mol-% B, | 10 mol-% C, | 30 mol-% D |
| Punkt T: | 15 mol-% B, | 32,5 mol-% C, | 52,5 mol-% D |

bedeutet, und ein Staudingerindex [$\eta$] erreicht wird, der im Bereich 50 bis 1000 $cm^3/g$ liegt, gemessen in 96 %iger $H_2SO_4$ bei 250 °C.

**4.** Verfahren nach Anspruch 3, dadurch gekennzeichnet, daß eine Lösungs-, Schmelze-, Feststoff- oder Grenzflächenkondensation durchgeführt wird.

**5.** Verfahren nach Anspruch 3 oder 4, dadurch gekennzeichnet, daß das Copolyamid über Tieftemperatur-Lösungsmethoden in aprotischen und polaren organischen Lösungsmitteln vom Amidtyp, gegebenenfalls unter Zusatz von Metallhalogeniden der ersten und zweiten Gruppe des Periodensystems als

Lösungsvermittler und anschließender Neutralisation der gebildeten HCl durch Zusatz basisch wirkender Stoffe hergestellt wird.

6. Copolyamid nach Anspruch 1 und 2 oder Verfahren zu seiner Herstellung nach Anspruch 3 bis 5, dadurch gekennzeichnet, daß die Zusammensetzung der Diamine innerhalb des Molprozentbereiches, bezogen auf die gesamte Molmenge der Diaminkomponenten, liegt, der durch die Eckpunkte Q', R', S', T' und U' gebildet wird, wobei:

| | | | |
|---|---|---|---|
| Punkt Q': | 20 mol-% B, | 70 mol-% C, | 10 mol-% D |
| Punkt R': | 55 mol-% B, | 35 mol-% C, | 10 mol-% D |
| Punkt S': | 55 mol-% B, | 30 mol-% C, | 15 mol-% D |
| Punkt T': | 40 mol-% B, | 30 mol-% C, | 30 mol-% D |
| Punkt U': | 20 mol-% B, | 50 mol-% C, | 30 mol-% D |

bedeutet.

7. Copolyamid nach Anspruch 1 oder 2 oder Verfahren zu seiner Herstellung nach Anspruch 3 bis 6, dadurch gekennzeichnet, daß zusätzlich eine weitere Struktureinheit der Formel E: ausgewählt aus -NH-$Ar^3$-Z'-$Ar^3$-NH- und

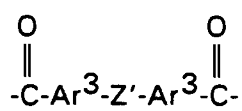

in Mengen bis zu 25 mol-% zugegen ist, in der Z' eine kovalente Bindung ist.

8. Verwendung des Copolyamids gemäß einem oder mehreren der Ansprüche 1 bis 7 zur Herstellung von Formkörpern insbesondere zur Herstellung von Fäden, Fasern, Pulp, Folien, Papier.

9. Verwendung der gemäß Anspruch 8 hergestellten Formkörper als Verstärkungsmaterial für Gummi, thermoplastische Kunststoffe oder wärmehärtende Harze, als Filtergewebe oder Dämmstoff, als hitzebeständiges Isolationsmaterial oder als Substrat für flexible Leiterplatten, insbesondere im Bereich der Datenverarbeitung.

**Claims**

1. A filament-, fiber- and film-forming aromatic copolyamide of the dicarboxylic acid/diamine type, characterized in that it consists at least of the four recurring structural units of formulae
   A: -CO-Ar-CO-
   B: -NH-$Ar^1$-NH-
   C: -NH-$Ar^2$-NH-
   D: -NH-$Ar^3$-Z-$Ar^3$-NH-

   where
   - -Ar-, -$Ar^1$- and -$Ar^3$- are each a divalent aromatic radical of 6 to 12 carbon atoms where the bonds are in the p- or a comparable coaxial or parallel position and which is optionally substituted by one or two alkyl or alkoxy radicals of up to four carbon atoms, including branched, or by halogen radicals,
   - -$Ar^2$- is a divalent aromatic radical where the bonds are in the m- or a comparable angled position and which is optionally substituted by one or two alkyl or alkoxy radicals of up to four carbon atoms, including branched, or by halogen radicals,
   - -Z- is a grouping -O-Ar-O- where -Ar- is as defined above,

   and the composition of the diamines B, C and D is within the mole percent area, based on the total number of moles of the diamine components B to D, which is defined by the corner points Q, R, S and T, where:
   Point Q is 15 mol-% of B, 80 mol-% of C, 5 mol-% of D
   Point R is 60 mol-% of B, 35 mol-% of C, 5 mol-% of D

Point S is 60 mol-% of B, 10 mol-% of C, 30 mol-% of D
Point T is 15 mol-% of B, 32,5 mol-% of C, 52.5 mol-% of D
and whose Staudinger index [$\eta$] is within the range from 50 to 1000 $cm^3/g$, measured in 96 % strength $H_2SO_4$ at 25 °C.

**2.** A copolyamide as claimed in claim 1, wherein the Staudinger index is within the range from 200 to 600 $cm^3/g$, measured in 96 % strength $H_2SO_4$ at 25 °C.

**3.** A process for preparing an aromatic copolyamide as claimed in claim 1 and 2 by performing a copolycondensation of at least four aromatic monomeric compounds A', B', C' and D' which each contain a group of the following formulae:

A: -CO-Ar-CO-
B: $-NH-Ar^1-NH-$
C: $-NH-Ar^2-NH-$
D: $-NH-Ar^3-Z-Ar^3-NH-$

where

- -Ar-, $-Ar^1-$, $-Ar^2-$ and $-Ar^3-$ and also -Z- are as defined in claim 1,

which comprises using the molar proportions of the monomeric diamine compounds B' to D' in such amounts that the copolyamide resulting therefrom falls within a triangular diagram for the composition inside a four-sided area formed by the corner points Q, R, S and T, where:
Point Q is 15 mol-% of B, 80 mol-% of C, 5 mol-% of D
Point R is 60 mol-% of B, 35 mol-% of C, 5 mol-% of D
Point S is 60 mol-% of B, 10 mol-% of C, 30 mol-% of D
Point T is 15 mol-% of B, 32.5 mol-% of C, 52.5 mol-% of D
and a Staudinger index [$\eta$] is obtained within the range from 50 to 1000 $cm^3/g$, measured in 96 % strength $H_2SO_4$ at 25 °C.

**4.** The process as claimed in claim 3, wherein a solution, melt, solid or interfacial condensation is carried out.

**5.** The process as claimed in claim 3 or 4, wherein the copolyamide is prepared via low-temperature solution methods in aprotic and polar organic solvents of the amide type in the presence or absence of metal halides of the first and second group of the periodic table as solubilizers and subsequent neutralization of the HCl formed by the addition of basic substances.

**6.** A copolyamide as claimed in claim 1 and 2 or the process for its preparation as claimed in claims 3 to 5, wherein the composition of the diamines is within the mole percent area, based on the total number of moles of the diamine components, which is formed by the corner points Q', R', S', T' and U', where:
Point Q' is 20 mol-% of B, 70 mol-% of C, 10 mol-% of D
Point R' is 55 mol-% of B, 35 mol-% of C, 10 mol-% of D
Point S' is 55 mol-% of B, 30 mol-% of C, 15 mol-% of D
Point T' is 40 mol-% of B, 30 mol-% of C, 30 mol-% of D
Point U' is 20 mol-% of B, 50 mol-% of C, 30 mol-% of D

**7.** A copolyamide as claimed in claim 1 and 2 or the process for its preparation as claimed in claims 3 to 6 , wherein there is additionally present a further structural unit of the formula E: selected from $-NH-Ar^3-Z'-Ar^3-NH-$ and

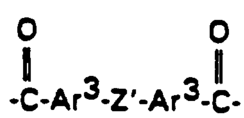

in amounts of up to 25 mol-% where Z' is a covalent bond.

**8.** The use of the copolyamide of one or more of claims 1 to 7 for producing shaped articles, in particular for producing filaments, fibers, pulp, films, sheet and paper.

9. The use of the shaped articles as claimed in claim 8 as a reinforcing material for rubber, thermoplastics or thermosetting resins, as a filter fabric or insulant, as a heat-resistant insulator or as a substrate for flexible circuit boards, in particular in data processing.

## Revendications

1. Copolyamide aromatique formant des filaments, des fibres et des films du type acide dicarboxyliquediamine, caractérisé en ce qu'il est composé au moins des quatre motifs répondant aux formules

   A : -CO-Ar-CO-
   B : $-NH-Ar^1-NH-$
   C : $-NH-Ar^2-NH-$
   D : $-NH-Ar^3-Z-Ar^3-NH-$,

   - -Ar-, $-Ar^1-$ et $-Ar^3-$ désignant chacun un radical aromatique divalent en $C_6$-$C_{12}$, dans lequel les liaisons sont en position para ou dans une position coaxiale ou parallèle comparable, et qui est également ramifié le cas échéant avec un ou deux radicaux alkyle ou alcoxy ayant jusqu'à 4 atomes de C, ou substitué par des radicaux halogène,
   - $-Ar^2-$ est un radical aromatique divalent dans lequel les liaisons sont en position méta ou font un angle comparable, et qui est également ramifié le cas échéant avec un ou deux radicaux alkyle ou alcoxy ayant jusqu'à 4 atomes de C, ou substitué par des radicaux halogène,
   - -Z- est un groupement -O-Ar-O-, dans lequel -Ar- est défini comme précédemment,

   et la composition des diamines B, C et D est dans le domaine de pourcentages molaires, par rapport à la quantité molaire totale des constituants diaminés B à D, qui est formé par les sommets Q, R, S et T, qui ont les significations suivantes :

| | | | |
|---|---|---|---|
| Point Q | 15 moles-% de B, | 80 moles-% de C, | 5 moles-% de D |
| Point R | 60 moles-% de B, | 35 moles-% de C, | 5 moles-% de D |
| Point S | 60 moles-% de B, | 10 moles-% de C, | 30 moles-% de D |
| Point T | 15 moles-% de B, | 32,5 moles-% de C, | 52,5 moles-% de D |

   et leur indice de Staudinger $[\eta]$ étant dans le domaine de 50 à 1000 $cm^3/g$, mesuré dans du $H_2SO_4$ à 96 % à 25 °C.

2. Copolyamide selon la revendication 1, caractérisé en ce que l'indice de Staudinger $[\eta]$ est dans le domaine de 200 à 600 $cm^3/g$, mesuré dans du $H_2SO_4$ à 96 % à 25 °C.

3. Procédé de préparation d'un copolyamide aromatique selon les revendications 1 ou 2, dans lequel on effectue une copolycondensation d'au moins quatre composés monomères aromatiques, A', B', C' et D', qui contiennent chacun un groupe répondant aux formules suivantes :

   A : -CO-Ar-CO-
   B : $-NH-Ar^1-NH-$
   C : $-NH-Ar^2-NH-$
   D : $-NH-Ar^3-Z-Ar^3-NH-$,

   -Ar-, $-Ar^1-$, $-Ar^2-$ et $-Ar^3-$ ainsi que Z ayant les significations indiquées dans la revendication 1, caractérisé en ce que les proportions molaires des composés diaminés monomères B' à D' sont telles que le copolymère obtenu à partir de ceux-ci se situe à l'intérieur d'un diagramme triangulaire pour la composition dans un domaine quadrilatéral qui est formé par les sommets Q, R, S et T, ces points ayant les significations suivantes :

| | | | |
|---|---|---|---|
| Point Q | 15 moles-% de B, | 80 moles-% de C, | 5 moles-% de D |
| Point R | 60 moles-% de B, | 35 moles-% de C, | 5 moles-% de D |
| Point S | 60 moles-% de B, | 10 moles-% de C, | 30 moles-% de D |
| Point T | 15 moles-% de B, | 32,5 moles-% de C, | 52,5 moles-% de D |

   et en ce que l'on obtient un indice de Staudinger $[\eta]$ qui est dans le domaine de 50 à 1000 $cm^3/g$, mesuré dans du $H_2SO_4$ à 96 % à 25 °C.

**4.** Procédé selon la revendication 3, caractérisé en ce qu'on effectue une condensation en solution, à l'état fondu, à l'état solide ou interfaciale.

**5.** Procédé selon les revendications 3 ou 4, caractérisé en ce que le copolyamide est préparé par des procédés en solution à basse température dans des solvants organiques aprotiques et polaires du type amide, le cas échéant avec addition d'halogénures métalliques du premier et du second groupe de la Classification Périodique en tant qu'agents favorisant la dissolution, puis neutralisation du HCl formé par addition de substances ayant une action basique.

**6.** Copolyamide selon les revendications 1 et 2 ou procédé pour sa préparation selon les revendications 3 à 5, caractérisé en ce que la composition des diamines est à l'intérieur du domaine de pourcentages molaires, par rapport à la quantité molaire totale des constituants diaminés, qui est formé par les sommets Q', R', S', T' et U', ces points ayant les significations suivantes :

| | | | |
|---|---|---|---|
| Point Q' | 20 moles-% de B, | 70 mole-% de C, | 10 moles-% de D |
| Point R' | 55 moles-% de B, | 35 moles-% de C, | 10 moles-% de D |
| Point S' | 55 moles-% de B, | 30 moles-% de C, | 15 moles-% de D |
| Point T' | 40 moles-% de B, | 30 moles-% de C, | 30 moles-% de D |
| Point U' | 20 moles-% de B, | 50 moles-% de C, | 30 moles-% de D |

**7.** Copolyamide selon les revendications 1 ou 2 ou procédé pour sa préparation selon les revendications 3 à 6, caractérisé en ce qu'on ajoute en outre un autre motif répondant à la formule E choisi parmi $-NH-Ar^3-Z'-Ar^3-NH-$ et

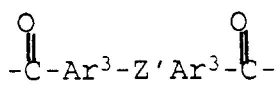

dans des quantités allant jusqu' à 25 moles-%, Z' étant une liaison covalente.

**8.** Utilisation du copolyamide selon une ou plusieurs des revendications 1 à 7 pour la fabrication de pièces moulées, en particulier pour la fabrication de filaments, de fibres, de pâtes de feuilles, de papiers.

**9.** Utilisation des pièces moulées fabriquées conformément à la revendication 8, comme matière de renforcement pour le caoutchouc, les matières thermoplastiques ou les résines thermodurcissables, comme tissu filtrant ou comme calorifuge, comme matière isolante résistant à la chaleur ou comme substrat pour des plaques de circuits imprimés souples, en particulier dans le domaine du traitement des données.

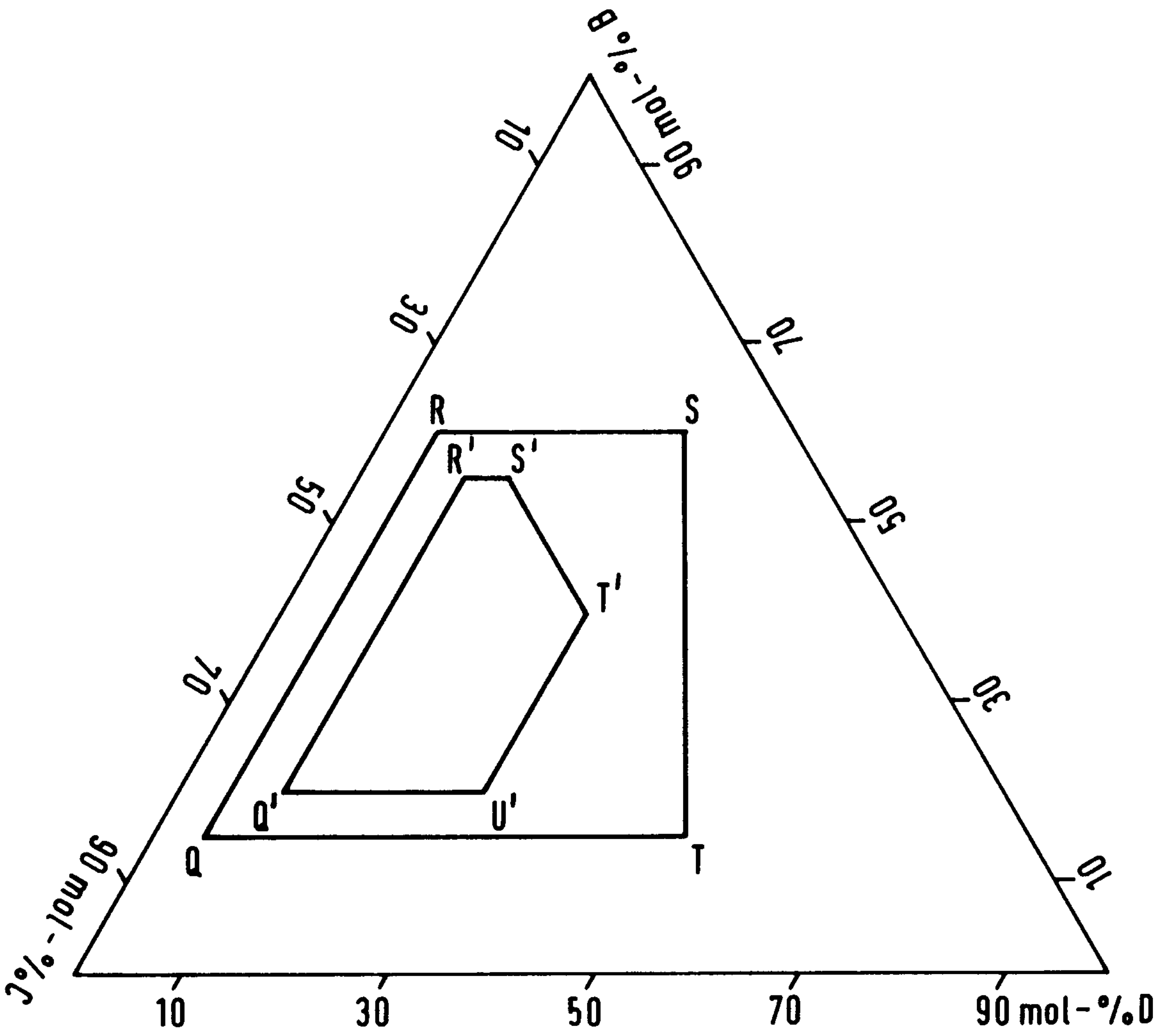
90 mol-% B
10
30
50
70
90 mol-% C
70
50
30
10
R
S
R'
S'
T'
Q'
U'
Q
T
10
30
50
70
90 mol-% D